# EUROPEAN PATENT APPLICATION

(11) **EP 2 169 726 A1**
(43) Date of publication of application: **31.03.2010**
(21) Application number: 08165111.9
(22) Date of filing: 25.09.2008
(51) Int. Cl.: H01L 31/042

(54) **Optimization of energy storage device arrangment**

(71) Applicant: Chan, Chien-Chiang, Chung-ho City, Taipei (TW)
(72) Inventor: Chan, Chien-Chiang, Chung-ho City, Taipei (TW)
(74) Representative: Lang, Christian

(57) **Abstract**

An applied structure of energy storage device is disclosed. The applied structure of energy storage device includes energy cells and at least one pair of positive and negative contact structures. Energy cells are arranged in a way facilitating the connecting of the energy cells in series or parallel. Each of the energy cells includes a flat type positive contact and a flat type negative contact. The flat type negative contact is arranged on the same or opposite sides of the flat type positive contact. The at least one pair of positive and negative contact structures are set for external connections.

## Description

### BACKGROUND

### Field of Invention

The present invention relates to an applied structure. More particularly, the present invention relates to an applied structure of energy storage device.

### Description of Related Art

Energy storage parts play important roles in our daily life since they influence the performance and the working time of electronic devices. Components such as capacitors used in the circuits and batteries used in portable devices are the most common energy storage parts.

In the past, the solution to backup power source is mainly lead-acid batteries. Nowadays, there are more choices available to meet the demand for backup power source, such as lithium-ion batteries, nickel-hydrogen batteries, fuel cells, solar cells, and Electric Double-Layer Capacitors.

Ultra-capacitors, also called Electric Double-Layer Capacitors (EDLC), have substantially high power density. In the past few years, these components have been used in consumer electronics, industrial and automotive applications. Today, ultra-capacitors with 20 kW/kg of power densities are already available, and they have very compact sizes (a small ultra-capacitor usually has a stamp size or even smaller). They can store a lot more energy than traditional capacitors. Faraday (F) is the unit of the capacitance value used by most ultra-capacitors, usually in 1 F to 5000F. The discharge rate can be very quick and can also be very slow. Their life is very long and can be designed for the entire life cycle of end products.

High efficiency energy cells such as ultra-capacitors and magnetic capacitors will be applied in many areas in the near future. As a result, the applied structures of these energy cells will be needed, and there is room for the improvement of the applied structures.

### SUMMARY

According to one embodiment of the present invention, the applied structure of energy storage device includes energy cells and at least one pair of positive and negative contact structures. Energy cells are arranged in a way facilitating the connecting of the energy cells in series or parallel. Each of the energy cells includes a flat type positive contact and a flat type negative contact. The flat type negative contact is arranged on the same or opposite sides of the flat type positive contact. The at least one pair of positive and negative contact structures are set for external connections.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a diagram illustrating an applied structure of energy storage device according to one embodiment of the invention;
Figure 2 is a diagram illustrating a first aspect of parallel connection according to one embodiment of the invention;
Figure 3 is a diagram illustrating a second aspect of parallel connection according to one embodiment of the invention;
Figure 4 is a diagram illustrating a third aspect of parallel connection according to one embodiment of the invention;
Figure 5 is a diagram illustrating a forth aspect of parallel connection according to one embodiment of the invention;
Fig. 6 is a diagram illustrating an applied structure of energy storage device according to another embodiment of the invention;
Figure 7 is a diagram illustrating a first aspect of parallel connection according to another embodiment of the invention;
Figure 8 is a diagram illustrating a second aspect of parallel connection according to another embodiment of the invention; and
Figure 9 is a diagram illustrating a third aspect of parallel connection according to another embodiment of the invention.

### DESCRIPTION OF THE PREFERRED EMBODIMENTS

Reference will now be made in detail to the embodiment of this invention, examples of which are illustrated in the accompanying drawings. Wherever possible, the same reference numbers are used in the drawings and the description to refer to the same or like parts.

The energy cells in the following embodiments are high efficiency energy cells such as super capacitors, magnetic capacitors, and miniature flat type batteries. The sizes of these energy cells can achieve those of postage stamps or even smaller. Conventional energy storage devices only have a single set of positive and negative contact structure. However, the energy storage devices described below have one or more sets of positive and negative contact structures for external connections.

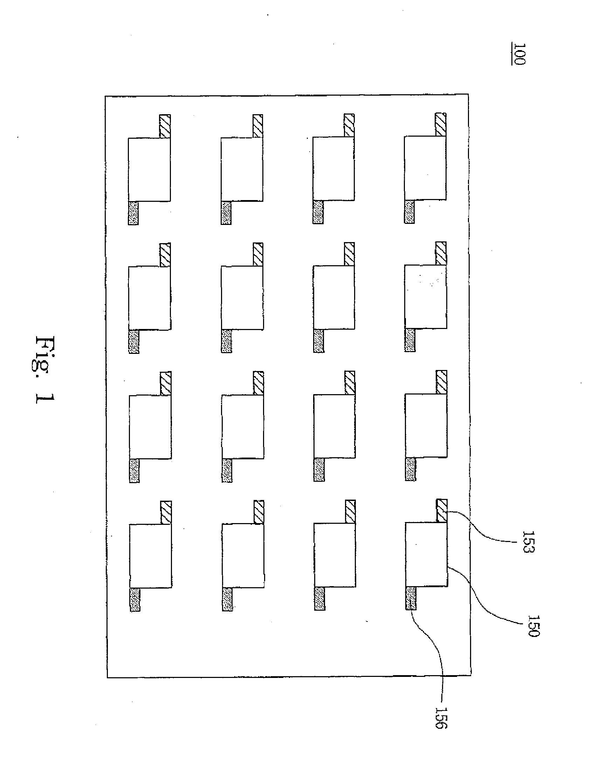

Fig. 1 is a diagram illustrating an applied structure of energy storage device according to one embodiment of the invention. The energy cells in the applied structure of energy storage device 100 are arranged in a form of a matrix. This type of arrangement is able to facilitate the connecting of the energy cells with different numbers in series or parallel. Each of the energy cells includes a flat type positive contact and a flat type negative contact as connecting points. For example, the energy cell 150 has a flat type positive contact 153 and a flat type negative contact 156.

For the purpose of illustration, this embodiment takes 16 energy cells arranged in 4 rows and 4 columns for example. This type of arrangement can make the connecting of the energy cells in series or parallel easier, and thus facilitating external connections of the energy storage device. When these energy cells are connected in series or parallel, there may be different practical requirements for various power management modules or electronic devices. Thus, the number of connected energy cells can be adjusted or designed accordingly. The pairs of positive and negative contact structures set for external connections can be arranged on the same side, neighboring sides, or opposite sides of the applied structure of energy storage device. In practice, these storage cells may be designed to be charged or discharged simultaneously. Alternatively, different pairs of positive and negative contacts may be charged or discharged alone. Different aspects of connecting the energy cells in parallel are stated below for further examples.

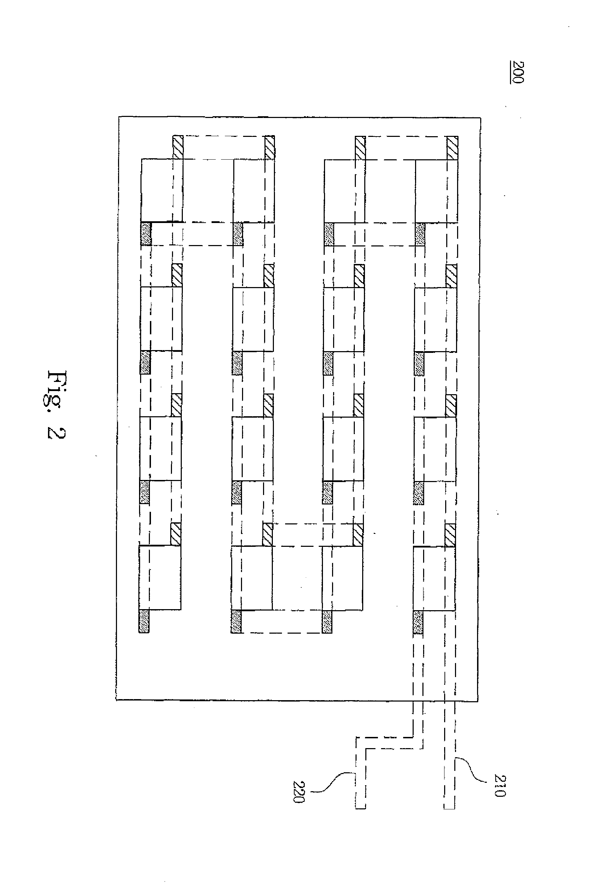

Figure 2 is a diagram illustrating a first aspect of parallel connection according to one embodiment of the invention. Connect the flat type positive contacts of the energy cells in the applied structure of energy storage device 200 by using the first flat type wiring structure 210, and the first flat type wiring structure 210 is extended outward of the applied structure of energy storage device 200 as the positive contact structure for external connections. In a similar manner, connect the flat type negative contacts of the energy cells in the applied structure of energy storage device 200 by using the second flat type wiring structure 220, and the second flat type wiring structure 220 is extended outward of the applied structure of energy storage device 200 as the negative contact structure for external connections. The pair of positive and negative contact structures set for external connections are on the same side of the applied structure of energy storage device 200.

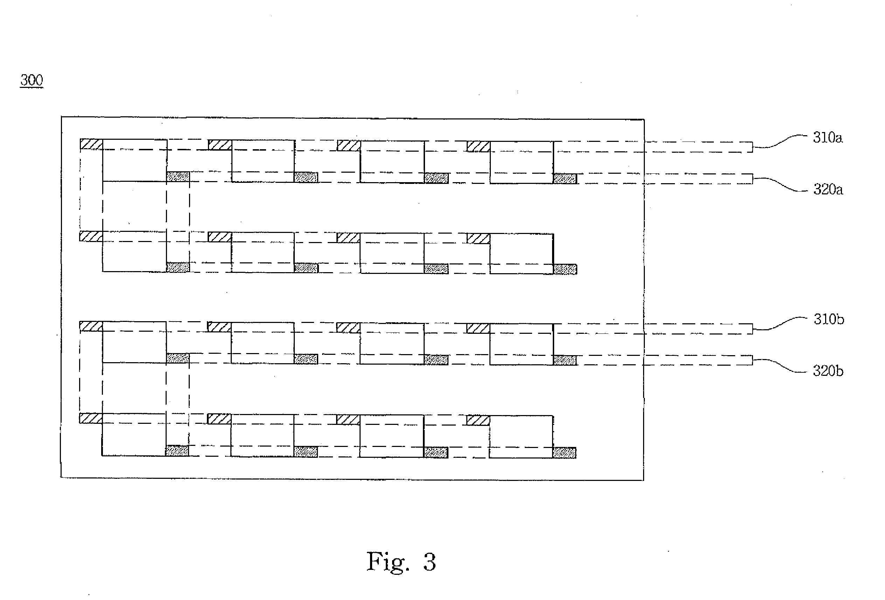

Figure 3 is a diagram illustrating a second aspect of parallel connection according to one embodiment of the invention. For every eight energy cells in the applied structure of energy storage device 300, connect their flat type positive contacts by using the first flat type wiring structures 310a and 310b respectively, and the first flat type wiring structures 310a and 310b are extended outward of the applied structure of energy storage device 300 as the positive contact structures for external connections. In a similar manner, connect their flat type negative contacts by using the second flat type wiring structures 320a and 320b respectively, and the second flat type wiring structures 320a and 320b are extended outward of the applied structure of energy storage device 300 as the negative contact structures for external connections. The two pairs of positive and negative contact structures set for external connections are on the same side of the applied structure of energy storage device 300.

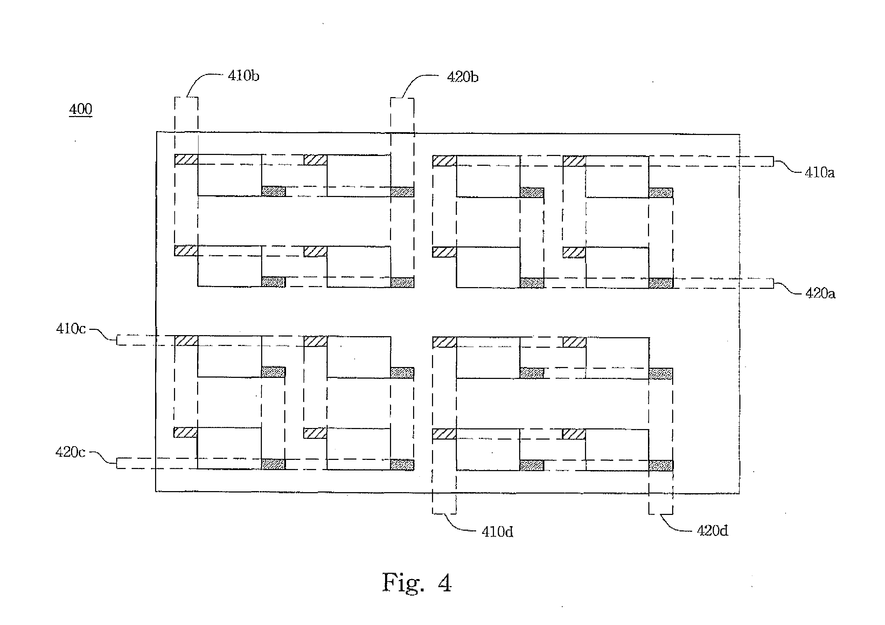

Figure 4 is a diagram illustrating a third aspect of parallel connection according to one embodiment of the invention. For every four energy cells in the applied structure of energy storage device 400, connect their flat type positive contacts by using the first flat type wiring structures 410a, 410b, 410c, and 410d respectively, and the first flat type wiring structures 410a, 410b, 410c, and 410d are extended outward of the applied structure of energy storage device 400 as the positive contact structures for external connections. In a similar manner, connect their flat type negative contacts by using the second flat type wiring structures 420a, 420b, 420c, and 420d respectively, and the second flat type wiring structures 420a, 420b, 420c, and 420d are extended outward of the applied structure of energy storage device 400 as the negative contact structures for external connections as well. The four pairs of positive and negative contact structures set for external connections are on the four sides of the applied structure of energy storage device 400 respectively.

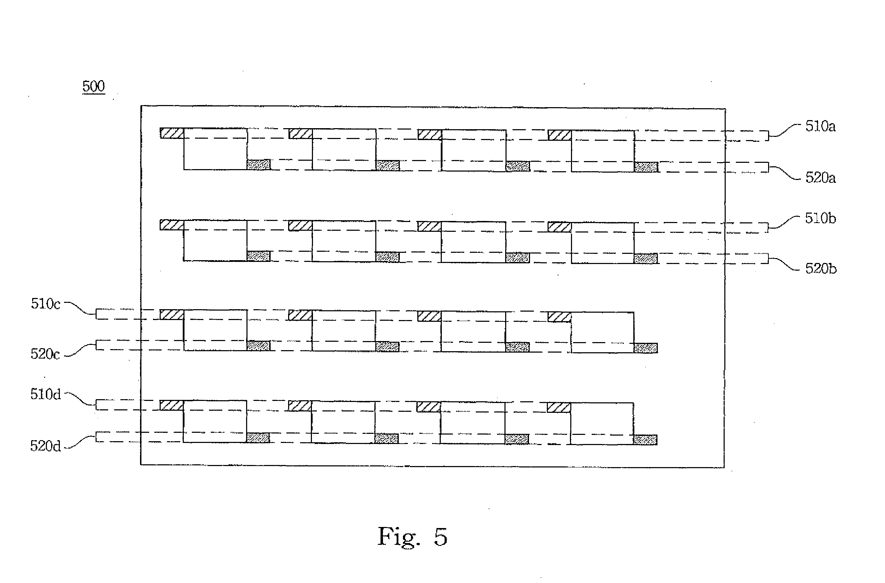

Figure 5 is a diagram illustrating a forth aspect of parallel connection according to one embodiment of the invention. For every four energy cells (in the same row) in the applied structure of energy storage device 500, connect their flat type positive contacts by using the first flat type wiring structures 510a, 510b, 510c, and 510d respectively, and the first flat type wiring structures 510a, 510b, 510c, and 510d are extended outward of the applied structure of energy storage device 500 as the positive contact structures for external connections. In a similar manner, connect their flat type negative contacts by using the second flat type wiring structures 520a, 520b, 520c, and 520d respectively, and the second flat type wiring structures 520a, 520b, 520c, and 520d are extended outward of the applied structure of energy storage device 500 as the negative contact structures for external connections as well. The four pairs of positive and negative contact structures set for external connections are on the opposite sides of the applied structure of energy storage device 500.

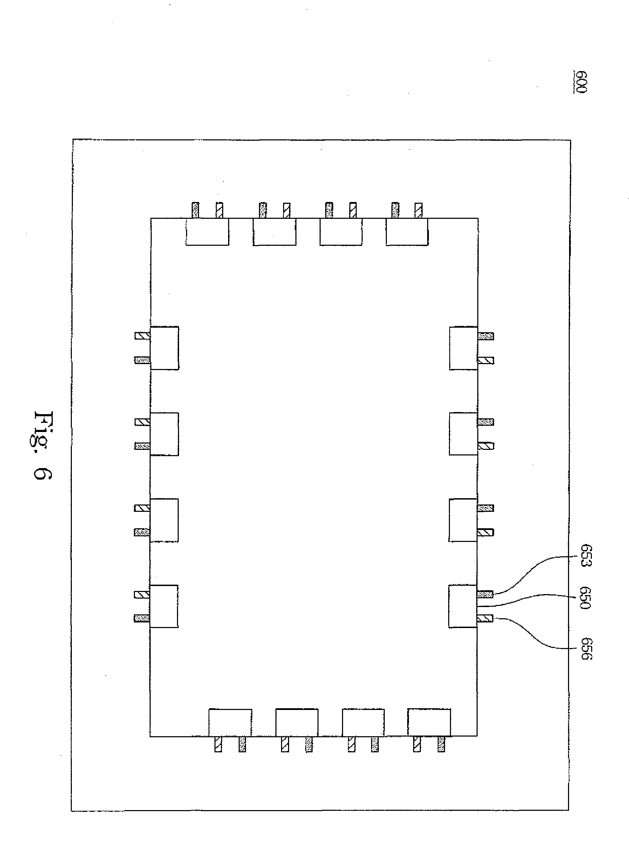

Fig. 6 is a diagram illustrating an applied structure of energy storage device according to another embodiment of the invention. This applied structure of energy storage device 600 includes multiple energy cells. Each of the energy cells includes a flat type positive contact and a flat type negative contact as connecting points. For example, the energy cell 650 has a flat type positive contact 653 and a flat type negative contact 656. The flat type positive and negative contact are on the same side of the energy cell. The flat type positive contacts and the flat type negative contacts of the energy cells are arranged along the four sides of a rectangle. This type of arrangement is able to facilitate the connecting of the energy cells with different numbers in series or parallel. In practice, these energy cells may be designed to be charged or discharged simultaneously.

For the purpose of illustration, this embodiment takes the arrangement of the flat type positive contacts and the flat type negative contacts of the energy cells along the four sides of a rectangle for example. This type of arrangement can make the connecting of the energy cells in series or parallel easier, and thus facilitating external connections of the energy storage device. When these energy cells are connected in series or parallel, there may be different practical requirements for various power management modules or electronic devices. Thus, the number of connected energy cells can be adjusted or designed accordingly. The pairs of positive and negative contact structures set for external connections can be arranged on the same side, neighboring sides, or opposite sides of the applied structure of energy storage device. Different pairs of positive and negative contacts may be charged or discharged alone. Different aspects of connecting the energy cells in parallel are stated below for further examples.

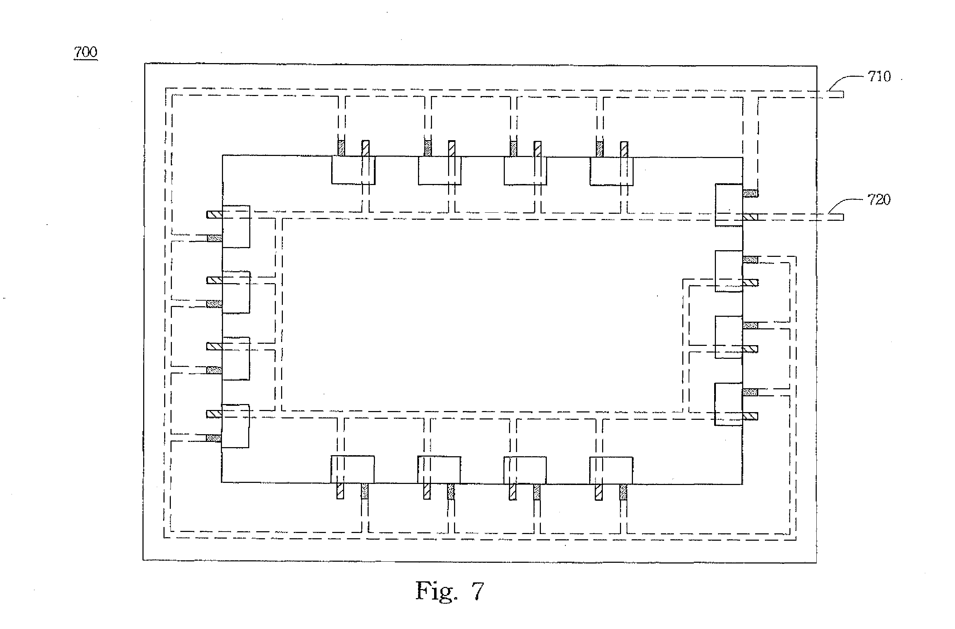

Figure 7 is a diagram illustrating a first aspect of parallel connection according to another embodiment of the invention. Connect the flat type positive contacts of the energy cells in the applied structure of energy storage device 700 by using the first flat type wiring structure 710, and the first flat type wiring structure 710 is extended outward of the applied structure of energy storage device 700 as the positive contact structure for external connections. In a similar manner, connect the flat type negative contacts of the energy cells in the applied structure of energy storage device 700 by using the second flat type wiring structure 720, and the second flat type wiring structure 720 is extended outward of the applied structure of energy storage device 700 as the negative contact structure for external connections. The pair of positive and negative contact structures set for external connections are on the same side of the applied structure of energy storage device 700.

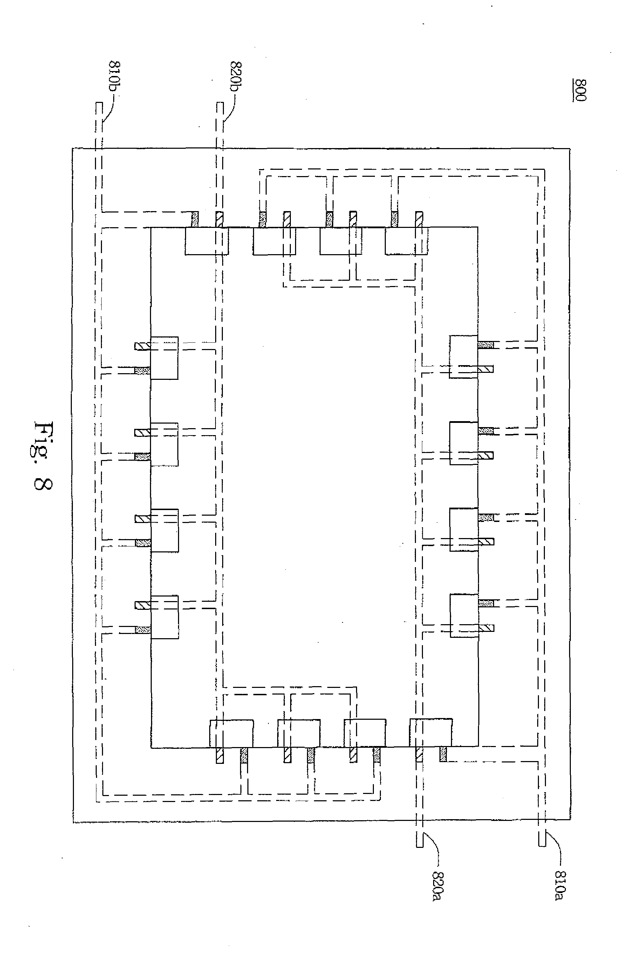

Figure 8 is a diagram illustrating a second aspect of parallel connection according to another embodiment of the invention. For every eight energy cells in the applied structure of energy storage device 800, connect their flat type positive contacts by using the first flat type wiring structures 810a and 810b respectively, and the first flat type wiring structures 810a and 810b are extended outward of the applied structure of energy storage device 800 as the positive contact structures for external connections. In a similar manner, connect their flat type negative contacts by using the second flat type wiring structures 820a and 820b respectively, and the second flat type wiring structures 820a and 820b are extended outward of the applied structure of energy storage device 800 as the negative contact structures for external connections. The two pairs of positive and negative contact structures set for external connections are on the opposite side of the applied structure of energy storage device 800.

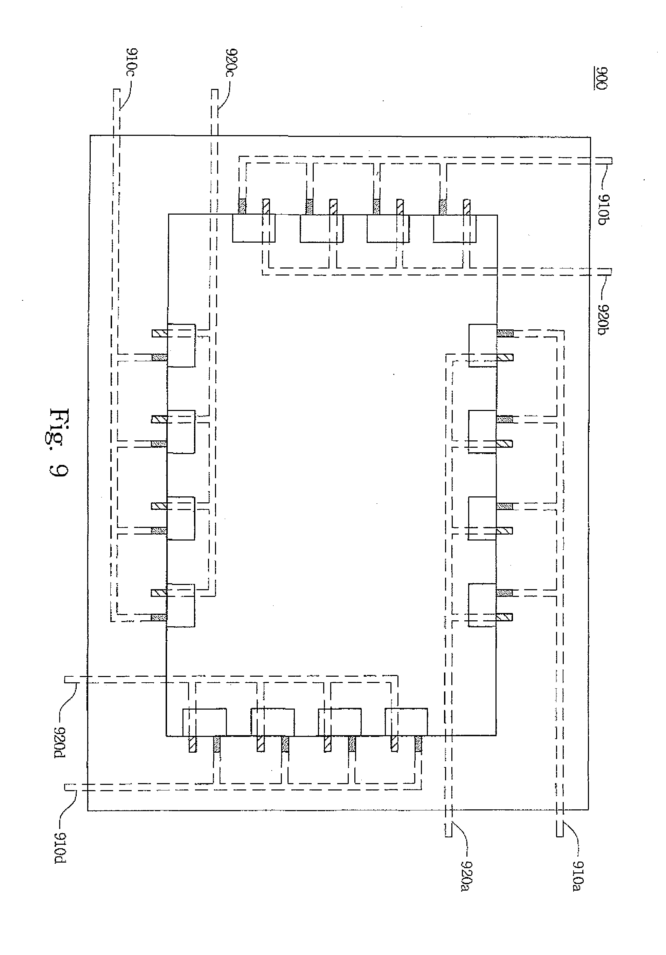

Figure 9 is a diagram illustrating a third aspect of parallel connection according to another embodiment of the invention. For every four energy cells in the applied structure of energy storage device 900, connect their flat type positive contacts by using the first flat type wiring structures 910a, 910b, 910c, and 910d respectively, and the first flat type wiring structures 910a, 910b, 910c, and 910d are extended outward of the applied structure of energy storage device 900 as the positive contact structures for external connections. In a similar manner, connect their flat type negative contacts by using the second flat type wiring structures 920a, 920b, 920c, and 920d respectively, and the second flat type wiring structures 920a, 920b, 920c, and 920d are extended outward of the applied structure of energy storage device 900 as the negative contact structures for external connections as well. The four pairs of positive and negative contact structures set for external connections are on the four sides of the applied structure of energy storage device 900 respectively.

Based on the actual requirement of each subsystem (such as the memory, processor, operating system, etc), the power management module can meet the practical requirements with different pairs of positive and negative contact structures for external connections. In comparison, when the energy storage device with only a single pair of positive and negative contact structure becomes energy-depleted, the energy storage device has to be replaced or recharged in order to be used again. In one embodiment, the energy cells in the energy storage device can be discharged in a particular order to meet the requirement of extended period of usage.

It will be apparent to those skilled in the art that various modifications and variations can be made to the structure of the embodiment without departing from the scope or spirit of the invention. In view of the foregoing, it is intended that the embodiment cover modifications and variations of this invention provided they fall within the scope of the following claims and their equivalents.

## Claims

1. An applied structure of energy storage device comprising:
a plurality of energy cells arranged in a way facilitating the connecting of the energy cells in series or parallel, each of the energy cells comprising:
a flat type positive contact; and
a flat type negative contact arranged on the same or opposite sides of the flat type positive contact; and
at least one pair of positive and negative contact structures set for external connections.

2. The applied structure of energy storage device as claimed in claim 1, wherein the energy cells are batteries or capacitors.

3. The applied structure of energy storage device as claimed in claim 1, wherein the energy cells are arranged in a form of a matrix.

4. The applied structure of energy storage device as claimed in claim 3, further comprising:
a first flat type wiring structure for connecting the flat type positive contacts of every N of the energy cells in parallel; and
a second flat type wiring structure for connecting the flat type negative contacts of every N of the energy cells in parallel;
wherein N is a positive integer greater than or equal to 2.

5. The applied structure of energy storage device as claimed in claim 1, wherein the flat type positive contacts and the flat type negative contacts of the energy cells are arranged along the four sides of a rectangle.

6. The applied structure of energy storage device as claimed in claim 5, further comprising:
a first flat type wiring structure for connecting the flat type type positive contacts of every N of the energy cells in parallel; and
a second flat type wiring structure for connecting the flat type type negative contacts of every N of the energy cells in parallel;
wherein N is a positive integer greater than or equal to 2.
